# EUROPEAN PATENT APPLICATION

(11) **EP 4 762 973 A2**
(43) Date of publication of application: **24.06.2026**
(21) Application number: 26176509.3
(22) Date of filing: 16.11.2023
(51) Int. Cl.: A43B 7/142

(54) **INSOLE AND INSOLE MANUFACTURING METHOD**

(30) Priority: 21.11.2022 JP 2022185631
(62) Divisional of application: 23894511.7
(71) Applicant: Madras Inc., Nagoya-shi, Aichi 467-0864 (JP)
(72) Inventor: Iwata, Tatsushichi, Nagoya-shi 467-0864 (JP)
(74) Representative: RavensPAT Patentanwälte Partnerschaft mbB

(57) **Abstract**

Shoe comfort is improved. An insole for a shoe includes a main portion, a covered portion, and a medial arch portion. The main portion is arranged in a manner that the main portion is to face a heel, a medial longitudinal arch portion, and a lateral longitudinal arch portion of a foot sole. The covered portion is formed in an area on a surface of the main portion, the surface being configured to be adjacent to the foot sole, the area being configured to face the medial longitudinal arch portion. The medial arch portion is arranged so as to cover the covered portion. A surface of the medial arch portion to be adjacent to the foot sole is an upper surface, and a surface of the medial arch portion opposite the upper surface is a lower surface. The lower surface of the medial arch portion has a shape that matches the covered portion. The main portion and the medial arch portion are each formed of a material having a different hardness.

## Description

### CROSS-REFERENCE TO RELATED APPLICATION

This international application claims priority based on Japanese Patent Application No. 2022-185631 filed on November 21, 2022 with the Japan Patent Office, and the entire disclosure of Japanese Patent Application No. 2022-185631 is incorporated in this international application by reference.

### TECHNICAL FIELD

The present disclosure relates to an insole for a shoe and a method for manufacturing the insole.

### BACKGROUND ART

As described in Patent Document 1, a technique is known that smooths the movement of the center of gravity of a user wearing shoes by arranging materials each having a different hardness in the respective portions of an insole (in other words, insole) of each shoe that are configured to support the ball of the big toe and the ball of the little toe.

### PRIOR ART DOCUMENTS

### PATENT DOCUMENTS

Patent Document 1: Japanese Patent No. 3662014

### SUMMARY OF THE INVENTION

### PROBLEMS TO BE SOLVED BY THE INVENTION

However, the insole of Patent Document 1 is not configured in consideration of the fit to the user's foot sole and dispersion of pressure applied to the foot sole; and thus there may be a possibility that sufficient comfort cannot be achieved.

In one aspect of the present disclosure, it is desirable to improve shoe comfort.

### MEANS FOR SOLVING THE PROBLEMS

One aspect of the present disclosure provides an insole for a shoe, the insole includes a main portion, a covered portion, and a medial arch portion. The main portion is a flat portion having a cushioning property and arranged in a manner that the main portion is to face a heel, a medial longitudinal arch portion, and a lateral longitudinal arch portion of a foot sole. The covered portion is formed in an area on a surface of the main portion. The surface is configured to be adjacent to the foot sole, and the area is configured to face the medial longitudinal arch portion. The medial arch portion is a portion having a cushioning property and is arranged so as to cover the covered portion. In the medial arch portion, a surface to be adjacent to the foot sole is an upper surface, and a surface opposite the upper surface is a lower surface. The lower surface of the medial arch portion has a shape that matches the covered portion. The main portion and the medial arch portion are each formed of a material having a different hardness. The covered portion is formed as an indented area on the surface of the main portion that is to be adjacent to the foot sole, and an outer edge of the medial arch portion overlaps an outer edge of the covered portion. At least a portion of the outer edge of the medial arch portion is formed by a linear portion that forms outer edges of the upper surface and of the lower surface. The hardness of the material forming the main portion and the hardness of the material forming the medial arch portion are 10 durometers or greater and 50 durometers or less. An absolute value obtained by subtracting the hardness of the material forming the main portion from the hardness of the material forming the medial arch portion is 10 durometers or greater and 40 durometers or less. The insole further includes the medial arch portion and a surface layer material. The medial arch portion is arranged in the covered portion. The surface layer material is a sheet-shaped member covering the upper surface of the main portion. The upper surface is a surface to be adjacent to the foot sole. The surface layer material and the upper surfaces of the medial arch portion and of the main portion are joined to each other using a hot-melt.

In the above-described configuration, the medial arch portion is formed as a separate member from the main portion. The hardness of the material forming the medial arch portion is different from the hardness of the material forming the main portion. Accordingly, by selecting the shape, the thickness, and the hardness of the medial arch portion, it is possible to adjust the shape, the height, and the hardness distribution of the portion of the insole that is to be in contact with the medial longitudinal arch portion. This improves the fit of the insole to the foot sole and makes it possible to facilitate dispersion of pressure applied to the foot sole from the insol. Thus, shoe comfort is improved.

This also makes it easy to arrange the medial arch portion in the covered portion.

In the vicinity of the outer edge of the medial arch portion, it is possible to inhibit sudden changes in thickness of the medial arch portion. Thus, it is possible to facilitate smooth changes in hardness distribution in an area in the vicinity of the outer edge of the medial arch portion. As a result, it is possible to reduce discomfort to the user.

Furthermore, it is possible to suitably integrate the medial arch portion and the main portion by the surface layer material. Thus, it is possible to inhibit impairment of the fit of the insole and impairment of the dispersion of the pressure applied to the foot sole from the insole.

In one aspect of the present disclosure, the surface layer material may further cover a lower surface of the main portion. The lower surface is located on a side opposite the upper surface of the main portion. The surface layer material and the lower surface of the main portion may be joined to each other using the hot-melt.

With the above-described configuration, it is possible to reinforce the medial arch portion and the main portion to an appropriate degree using the surface layer material, and inhibit loss of shape of the insole due to the load from the foot sole. Thus, it is possible to inhibit impairment of the fit of the insole and impairment of the dispersion of the pressure applied to the foot sole from the insole.

One aspect of the present disclosure may further include an ear portion provided along an outer edge of the main portion. The surface layer material may include an upper surface layer material and a lower surface layer material. The upper surface layer material covers the upper surfaces of the medial arch portion and of the main portion. The lower surface layer material covers the lower surface of the main portion. The ear portion may include: an upper edge portion that includes an outer edge of the upper surface layer material; and a lower edge portion that includes an outer edge of the lower surface layer material. The upper edge portion and the lower edge portion may be arranged in an overlapping manner and joined to each other using the hot-melt.

With the above-described configuration, it is possible to suitably join the upper surface layer material and the lower surface layer material to each other at the ear portion. It is also possible due to the ear portion to inhibit loss of shape of the insole and improve the strength of the insole.

One aspect of the present disclosure provides a method for manufacturing an insole for a shoe using a first die and a second die. The insole includes a main portion, a covered portion, and a medial arch portion. The main portion is a flat portion having a cushioning property and arranged in a manner that the main portion is to face a heel, a medial longitudinal arch portion, and a lateral longitudinal arch portion of a foot sole. The covered portion is formed in an area on a surface of the main portion. The surface is configured to be adjacent to the foot sole and the area is configured to face the medial longitudinal arch portion. The medial arch portion is a portion having a cushioning property and is arranged so as to cover the covered portion. A surface of the medial arch portion opposite the surface to be adjacent to the foot sole is a lower surface. The lower surface of the medial arch portion has a shape that matches the covered portion. The main portion and the medial arch portion are each formed of a material having a different hardness. The insole further includes an upper surface layer material that is a sheet-shaped member covering an upper surface of the medial arch portion arranged in the covered portion and an upper surface of the main portion. The upper surface of the medial arch portion and the upper surface of the main portion are each a surface to be adjacent to the foot sole. The first die includes: a first portion having a shape corresponding to a shape of the insole; and the first circumferential portion surrounding the first portion. The second die includes a second portion that is a recessed portion configured to form a housing space between the second portion and the first portion when the second portion faces the first portion, the second portion being a portion having a shape corresponding to the shape of the insole; and a second circumferential portion surrounding the second portion. In a heated object, a hot-melt is arranged between the upper surfaces of the medial arch portion and of the main portion and the upper surface layer material covering the upper surfaces, the medial arch portion being arranged in the covered portion, and an upper edge portion is formed in the upper surface layer material so as to surround the upper surfaces. The method for manufacturing the insole includes: arranging the heated object in the housing space formed between the first portion and the second portion, the housing space being formed by bringing the first circumferential portion and the second circumferential portion close to each other so that: the upper surface layer material and the upper surfaces of the medial arch portion and of the main portion face the first portion of the first die; the lower surface of the main portion faces the second portion of the second die; and the upper edge portion is positioned between the first circumferential portion and the second circumferential portion; and joining the upper surfaces of the medial arch portion and of the main portion and the upper surface layer material to each other by heating, through the first die and the second die, the heated object arranged in the housing space.

With the above-described configuration, it is possible to suitably manufacture the insole that has improved fit to the foot sole and is capable of facilitating dispersion of the pressure applied to the foot sole. Thus, the shoe comfort is improved. It is also possible to suitably join the upper surface layer material to the medial arch portion and the main portion.

In one aspect of the present disclosure, the insole may further include a lower surface layer material that is a sheet-shaped member and a portion covering the lower surface of the main portion. The lower surface is a surface opposite the upper surface of the main portion. The heated object may further include a hot-melt arranged between the lower surface of the main portion and the lower surface layer material covering the lower surface. The method for manufacturing the insole may include: arranging the heated object in the housing space so that the upper surface layer material and the upper surfaces of the medial arch portion and of the main portion face the first portion of the first die, and the lower surface layer material and the lower surface of the main portion face the second portion of the second die; and joining, by heating the heated object through the first die and the second die, the upper surfaces of the medial arch portion and of the main portion and the upper surface layer material to each other, and the lower surface of the main portion and the lower surface layer material to each other.

With the above-described configuration, it is possible to suitably join the upper surface layer material and the lower surface layer material to the medial arch portion and the main portion.

In one aspect of the present disclosure, the insole may further include an ear portion provided along an outer edge of the main portion. The ear portion may include: the upper edge portion that includes an outer edge of the upper surface layer material; and a lower edge portion that includes an outer edge of the lower surface layer material. In the method for manufacturing the insole, when the heated object is arranged in the housing space, the upper edge portion and the lower edge portion may overlap each other between the first circumferential portion and the second circumferential portion, and a hot-melt may be arranged between the upper edge portion and the lower edge portion. By heating the heated object through the first die and the second die, the upper edge portion and the lower edge portion may be also joined to each other to thereby form the ear portion.

With the above-described configuration, it is possible to suitably form the ear portion.

In one aspect of the present disclosure, the heated object may further include a cut portion provided along an outer edge of the upper surface of the main portion, and the main portion and the cut portion may be formed as an integrated member. In the heated object, the upper surface layer material may cover the upper surfaces of the medial arch portion and of the main portion, the upper edge portion of the upper surface layer material may cover the cut portion, and the hot-melt may be arranged between the upper surface layer material and the medial arch portion, the main portion, and the cut portion. In the method for manufacturing the insole, the heated object may be arranged in the housing space such that the upper edge portion and the cut portion are interposed between the first circumferential portion and the second circumferential portion. The medial arch portion, the main portion, and the cut portion may be joined to the upper surface layer material by heating the heated object through the first die and the second die. The method for manufacturing the insole may further include, subsequent to joining the medial arch portion, the main portion, and the cut portion and the upper surface layer material to each other, cutting off the cut portion and a portion of the upper surface layer material that covers the cut portion.

With the above-described configuration, it is possible to suitably join the upper surface layer material to the medial arch portion and the main portion.

### BRIEF DESCRIPTION OF THE DRAWINGS

FIG. 1 is a top view of an insole (for a right foot) according to a first embodiment.
FIG. 2 is a top view of a cushion material (for a right foot) according to the first embodiment.
FIG. 3 is a front view of the cushion material (for a right foot) according to the first embodiment.
FIG. 4 is a bottom view of the cushion material (for a right foot) according to the first embodiment.
FIG. 5 is a rear view of the cushion material (for a right foot) according to the first embodiment.
FIG. 6 is a left side view of the cushion material (for a right foot) according to the first embodiment viewed from a left side (in other words, from a side of a medial longitudinal arch portion of a right foot).
FIG. 7 is a right side view of the cushion material (for a right foot) according to the first embodiment viewed from a right side (in other words, from a side of a lateral longitudinal arch portion of the right foot).
FIG. 8 is a cross-sectional view taken along a line VIII-VIII in FIG. 2.
FIG. 9 is a cross-sectional view taken along a line IX-IX in FIG. 2.
FIG. 10 is a cross-sectional view taken along a line X-X in FIG. 2.
FIG. 11 is a cross-sectional view taken along a line XI-XI in FIG. 2.
FIG. 12 is a cross-sectional view of a main portion and a medial arch portion of the insole according to the first embodiment in a left-right direction.
FIG. 13 is a top view of an insole (for a right foot) according to a second embodiment.
FIG. 14 is a top view of a cushion material (for a right foot) according to the second embodiment.
FIG. 15 is a front view of the cushion material (for a right foot) according to the second embodiment.
FIG. 16 is a bottom view of the cushion material (for a right foot) according to the second embodiment.
FIG. 17 is a rear view of the cushion material (for a right foot) according to the second embodiment.
FIG. 18 is a left side view of the cushion material (for a right foot) according to the second embodiment.
FIG. 19 is a right side view of the cushion material (for a right foot) according to the second embodiment.
FIG. 20 is a cross-sectional view taken along a line XX-XX in FIG. 14.
FIG. 21 is a cross-sectional view taken along a line XXI-XXI in FIG. 14.
FIG. 22 is a cross-sectional view taken along a line XXII-XXII in FIG. 14.
FIG. 23 is a cross-sectional view taken along a line XXIII-XXIII in FIG. 14.
FIG. 24 is a cross-sectional view taken along a line XXIV-XXIV in FIG. 14.
FIG. 25 is a cross-sectional view of a main portion, a medial arch portion, and a front portion of the insole of according to the second embodiment in a left-right direction.
FIG. 26 is a diagram illustrating a method for manufacturing an insole according to a third embodiment.
FIG. 27 is a diagram illustrating the method for manufacturing an insole according to the third embodiment.
FIG. 28 is a diagram illustrating a method for manufacturing an insole according to a fourth embodiment.
FIG. 29 is a diagram illustrating the method for manufacturing an insole according to the fourth embodiment.

### EXPLANATION OF REFERENCE NUMERALS

1...insole, 10...cushion material, 11...hot-melt, 2A...main portion, 20...upper surface, 21...lower surface, 22...covered portion, 23...outer edge, 2B...medial arch portion, 24...upper surface, 25...lower surface, 26...outer edge, 3...surface layer material, 30...upper surface layer material, 31...upper edge portion, 32...lower surface layer material, 33...lower edge portion, 34...ear portion, 4...insole, 40...cushion material, 41...hot-melt, 5A...main portion, 50...upper surface, 51...lower surface, 52...covered portion, 53...front sub-covered portion, 54...rear sub-covered portion, 5B...medial arch portion, 55...upper surface, 56...lower surface, 57...outer edge, 58...cut portion, 58A...upper surface, 58B...lower surface, 6A...front portion, 60...upper surface, 61...lower surface, 62...outer edge, 6B...rear portion, 63...upper surface, 64...lower surface, 65...outer edge, 7...surface layer material, 80...first die, 81...first contact surface, 82...first portion, 83...first circumferential portion, 84...second die, 85...second contact surface, 86...second portion, 87...second circumferential portion, 88...housing space.

### MODE FOR CARRYING OUT THE INVENTION

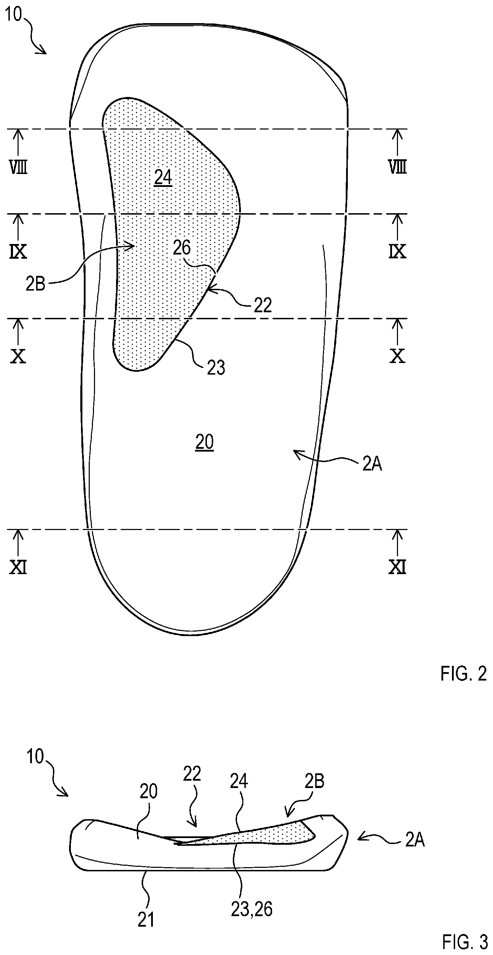

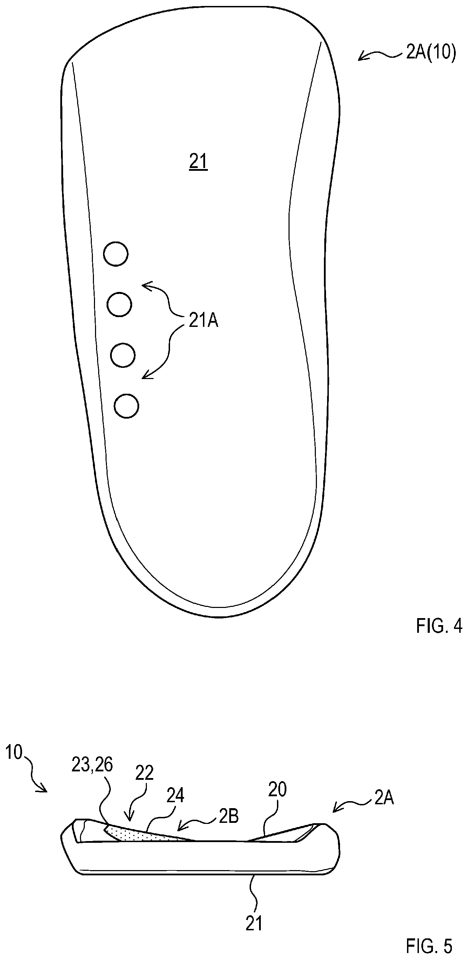

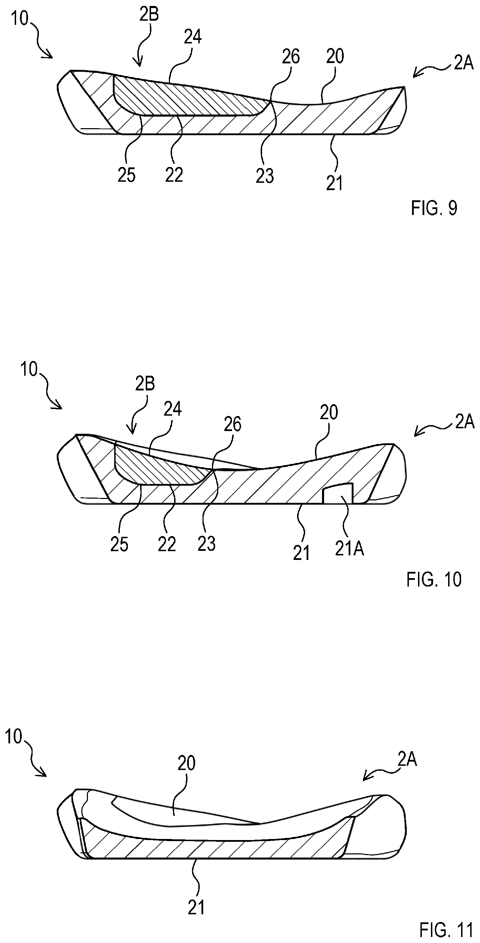

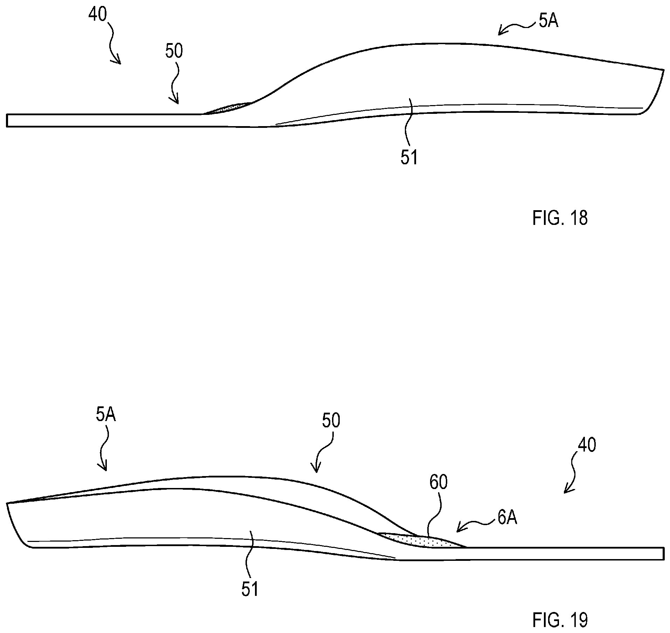

Some embodiments of the present disclosure will be described below with reference to drawings. It should be noted that embodiments of the present disclosure are not limited to the below-described embodiments, and the present disclosure may be carried out in various forms within the technical scope thereof. It is additionally noted that the patterns in FIGS. 2, 3, 5, 7 to 12, 14, 15, and 18 to 29 are marked for the purpose of convenience in discriminating between members, and the members disclosed in the below-described embodiments are not marked with such patterns.

### [1. First Embodiment]

### [(1) Overview]

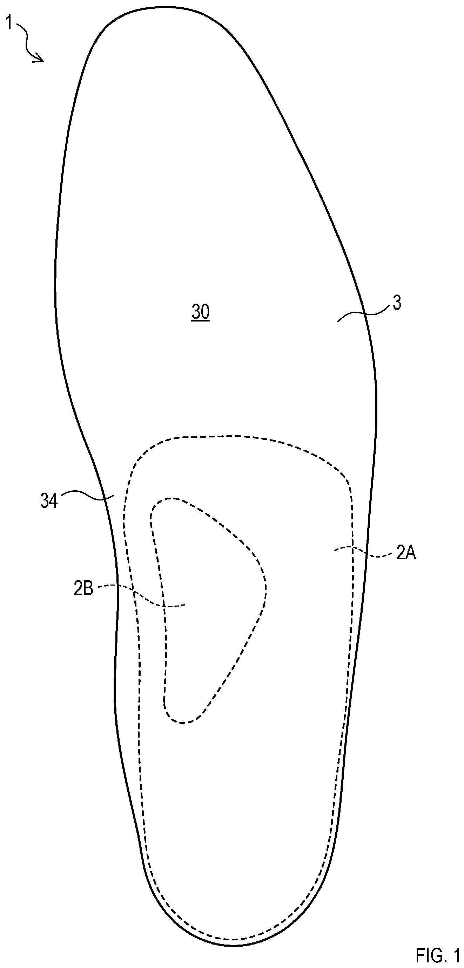

An insole 1 according to a first embodiment may be used for various shoes (see FIG. 1). Specifically, the insole 1 may be used for various shoes and footwear, such as business shoes, casual shoes, pumps, sneakers, sandals, and boots. The insole 1 has a cushioning property and forms an upper surface of a sole of a shoe. In other words, the insole 1 is configured to contact a foot sole of a user, and a midsole and an outsole of the shoe are located below the insole 1. The insole 1 may be distributed as part of a shoe in which the insole 1 is used, and the insole 1 may be separately distributed.

Hereinafter, the left side of a right shoe and the right side of a left shoe will be referred to as the medial side, and the sides opposite these will be referred to as the lateral side. The toe side will be referred to as the front side, and the heel side will be referred to as the rear side.

The insole 1 includes a main portion 2A and a medial arch portion 2B each having a cushioning property (hereinafter, to be referred to also as a cushion material 10), and includes a surface layer material 3 (see FIG. 1). Each portion included in the insole 1 will be described below.

### [(2) Main portion]

The main portion 2A is a flat portion arranged in a manner that the main portion 2A is to face at least the heel, the medial longitudinal arch portion, and the lateral longitudinal arch portion of the foot sole (see FIGS. 2 to 12).

The surface of the main portion 2A configured to face the foot sole will be referred to as an upper surface 20, and the surface opposite the upper surface 20 will be referred to as a lower surface 21 herein. In the first embodiment, the portion of the external surface of the main portion 2A other than the upper surface 20 will be referred to as the lower surface 21, for example.

The main portion 2A includes a covered portion 22 formed in an area on the upper surface 20. The area is configured to face the medial longitudinal arch portion. The covered portion 22 is an indentation on the upper surface 20 of the main portion 2A and has an elongated shape extending in the front-rear direction when viewed from above. The covered portion 22 is formed such that, the vicinity of a portion of an outer edge 23 of the covered portion 22 becomes gradually shallower toward the outer edge 23.

In the first embodiment, the main portion 2A includes at least one hole 21A formed on the lower surface 21 at a position that will face the lateral longitudinal arch portion, for example. More specifically, the lower surface 21 is provided with four cylindrical holes 21A aligned in the front-rear direction in the first embodiment.

### [(3) Medial Arch Portion]

The medial arch portion 2B is arranged so as to cover the covered portion 22 (see FIGS. 2, 3, 5, and 7 to 12). The medial arch portion 2B has, for example, a flat shape and includes an upper surface 24 located to be adjacent to the foot sole and a lower surface 25 opposite the upper surface 24. Of course, the medial arch portion 2B is not limited to a flat shape and may take on various shapes.

The lower surface 25 of the medial arch portion 2B has a shape that matches the covered portion 22 and, when the medial arch portion 2B is arranged in the covered portion 22, the lower surface 25 of the medial arch portion 2B contacts (for example, closely contacts) the covered portion 22.

The lower surface 25 of the medial arch portion 2B is joined to the covered portion 22. For example, a case is assumed where the medial arch portion 2B and the main portion 2A are each formed of a difficult-to-join material, such as Crystal Gel (registered trademark) which will be described later. In such a case, a high-adhesion processing may be performed on the lower surface 25 of the medial arch portion 2B and the covered portion 22 so as to join these portions.

When the medial arch portion 2B is arranged in the covered portion 22, an outer edge 26 of the medial arch portion 2B and the outer edge 23 of the covered portion 22 may overlap with each other, or there may a slight misalignment between the outer edges 23, 26. The medial arch portion 2B is formed so as to inhibit a step from being created between the upper surface 24 of the medial arch portion 2B and the upper surface 20 of the main portion 2A when the medial arch portion 2B is arranged in the covered portion 22.

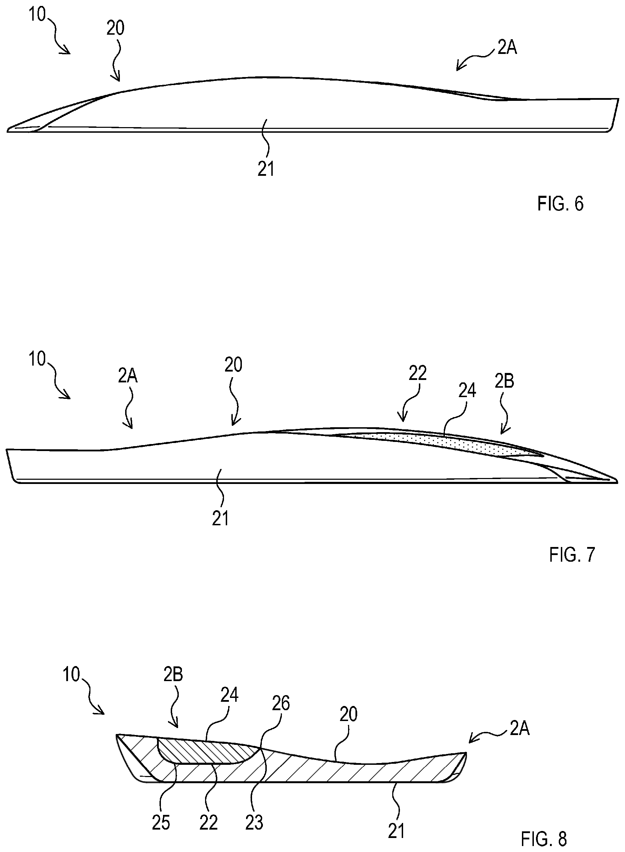

The entirety of the outer edge 26 of the medial arch portion 2B is formed by a linear portion that forms the outer edges of the upper surface 24 and of the lower surface 25 of the medial arch portion 2B (see FIGS. 8 to 12). In other words, the outer edge 26 of the medial arch portion 2B is formed by a tip of a horned-shaped or pointed portion at which the upper surface 24 and the lower surface 25 intersect. Thus, the medial arch portion 2B may be formed such that the thickness around the outer edge 26 of the medial arch portion 2B gradually becomes thinner toward the outer edge 26.

A portion of the outer edge 26 of the medial arch portion 2B may be formed as the above-described linear portion. Other portions of the outer edge 26 may be formed in a rounded shape or may extend in a planner manner. The entirety of the outer edge 26 of the medial arch portion 2B may be formed in a rounded shape or may extend in a planner manner.

### [(4) Regarding Materials]

The main portion 2A and the medial arch portion 2B are each formed of a material having a different hardness, and the hardnesses of these materials are, for example, 10 durometers or greater and 50 durometers or less. In the present specification, hardnesses are measured by a method in accordance with JIS K6253 (JIS- type E). The hardnesses of these materials are not limited to this and may be defined as appropriate.

For example, the hardness of the material forming the medial arch portion 2B is higher than the hardness of the material forming the main portion 2A, and the difference between these hardnesses is 10 durometers or greater and 40 durometers or less. Other than this, the hardness of the material forming the main portion 2A may be higher than the hardness of the material forming the medial arch portion 2B, and the difference between these hardnesses may be 10 durometers or greater and 40 durometers or less, for example. Of course, the difference between these hardnesses is not limited to this and may be defined as appropriate.

The main portion 2A and the medial arch portion 2B are each formed of, for example, a gel material. Specifically, the main portion 2A and the medial arch portion 2B may be each formed of, for example, a styrene-based gel material, more specifically, may be each formed of Crystal Gel described above. Of course, the materials of the main portion 2A and the medial arch portion 2B are not limited to this, and the main portion 2A and/or the medial arch portion 2B may be formed of a material, other than gel materials, having a cushioning property such as a porous material (for example, a sponge material such as EVA).

### [(5) Surface layer material]

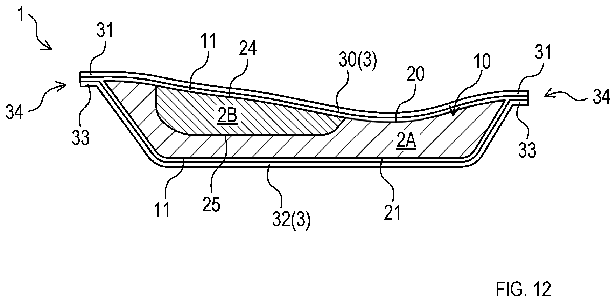

The surface layer material 3 is a sheet-shaped member and covers the entire external surface of the cushion material 10 formed by the main portion 2A and the medial arch portion 2B that is arranged in the covered portion 22 of the main portion 2A (see FIGS. 1 and 12). When the insole 1 is arranged on the shoe sole, the cushion material 10 is to face the heel, the medial longitudinal arch portion, and the lateral longitudinal arch portion of the foot sole, and the surface layer material 3 covers substantially the entire area of the shoe sole.

Specifically, the surface layer material 3 includes an upper surface layer material 30 and a lower surface layer material 32. The upper surface layer material 30 covers the upper surface 20 of the main portion 2A and the upper surface 24 of the medial arch portion 2B. The lower surface layer material 32 covers the lower surface 21 of the main portion 2A. Using a hot-melt 11, the upper surface layer material 30 is joined to the upper surface 24 of the medial arch portion 2B and the upper surface 20 of the main portion 2A, and the lower surface layer material 32 is joined to the lower surface 21 of the main portion 2A.

The surface layer material 3 includes an ear portion 34 provided along the outer edge of the main portion 2A (in other words, the cushion material 10). The ear portion 34 is provided, for example, so as to surround the cushion material 10 and protrudes forward from the front end of the cushion material 10. In other words, the ear portion 34 covers the portion of the shoe sole in front of the cushion material 10. Of course, the arrangement of the ear portion 34 is not limited to this, and the ear portion 34 may be provided along a portion of the outer edge of the main portion 2A.

A portion of the upper surface layer material 30 that includes the outer edge will be herein referred to as an upper edge portion 31. The upper edge portion 31 is a portion of the upper surface layer material 30 does not cover the cushion material 10 and is provided so as to surround the outer edge of the upper surface 20 of the main portion 2A. In other words, the upper edge portion 31 corresponds to the outer edge of the upper surface layer material 30 and a portion adjacent to the outer edge.

Similarly, a portion of the lower surface layer material 32 that includes the outer edge will be referred to as a lower edge portion 33. The lower edge portion 33 is a portion of the lower surface layer material 32 that does not cover the cushion material 10 and is provided so as to surround the outer edge of the lower surface 21 of the main portion 2A. In other words, the lower edge portion 33 corresponds to the outer edge of the lower surface layer material 32 and a portion adjacent to the outer edge.

The ear portion 34 is formed by joining, using the hot-melt 11, the upper edge portion 31 and the lower edge portion 33 arranged in an overlapping manner.

In the first embodiment, the ear portion 34 is provided, for example, along the outer edge of the upper surface 20 of the main portion 2A. In other words, the ear portion 34 is provided along the upper surface 20 of the main portion 2A so as to extend outward from the outer edge of the upper surface 20. Of course, the arrangement of the ear portion 34 is not limited to this, the ear portion 34 may be provided at a position in the main portion 2A below the upper surface 20, in other words, at a position in the lower surface 21 of the main portion 2A where side portions of the main portion 2A are formed.

The surface layer material 3 according to the first embodiment may be configured without the ear portion 34. For example, the surface layer material 3 according to the first embodiment may have a configuration, similar to that in a second embodiment, as an upper surface layer material that covers the upper surface of the cushion material 10 which is the surface to be adjacent to the foot-sole, and may be a configured without the ear portion 34 and the lower surface layer material 32.

### [(6) Overall Shape of Insole]

The shapes and the thicknesses of the main portion 2A and of the medial arch portion 2B are adjusted so that the insole 1 has a three-dimensional shape which fits the shape of the foot sole (see FIGS. 2 to 12).

Specifically, the shapes and the thicknesses of the medial arch portion 2B and of the covered portion 22 in the main portion 2A and a portion surrounding the covered portion 22 are adjusted so that the portion of the insole 1 which is to face the medial longitudinal arch portion has an increased thickness. This facilitates contact of the insole 1 with the medial longitudinal arch portion. In addition, the shape and the thickness of the main portion 2A are adjusted so that the medial side, the lateral side, and the rear side of the edge portion of the insole 1 protrude upward.

### [2. Second Embodiment]

### [(1) Overview]

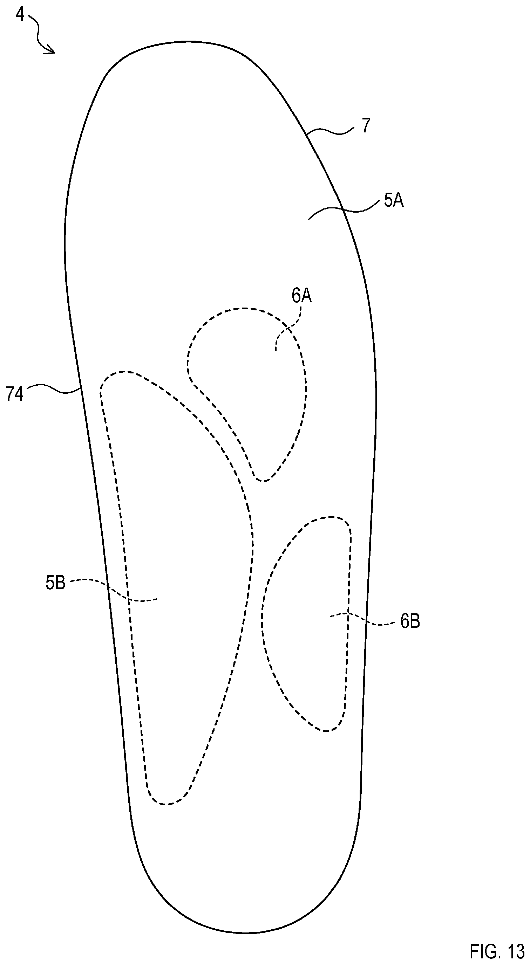

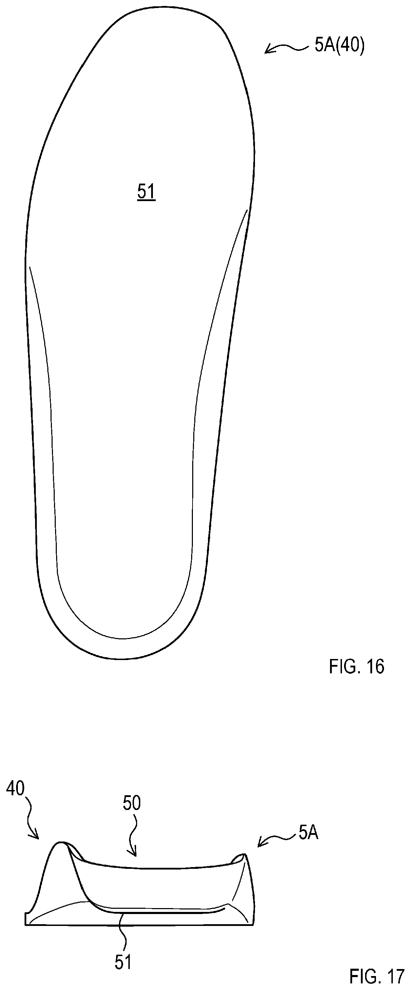

An insole 4 according to a second embodiment has a configuration similar to that of the insole 1 according to the first embodiment; however, the insole 4 differs from the first embodiment in the shape of a main portion 5A, the configuration of a surface layer material 7, and the like (see FIGS. 13 to 25). The following description of the insole 4 according to the second embodiment focuses mainly on differences from the first embodiment.

The insole 4 includes the main portion 5A, a medial arch portion 5B, a front portion 6A, and a rear portion 6B, each of which has a cushioning property. These portions form a cushion material 40. Each portion included in the insole 4 will be described below.

### [(2) Main portion]

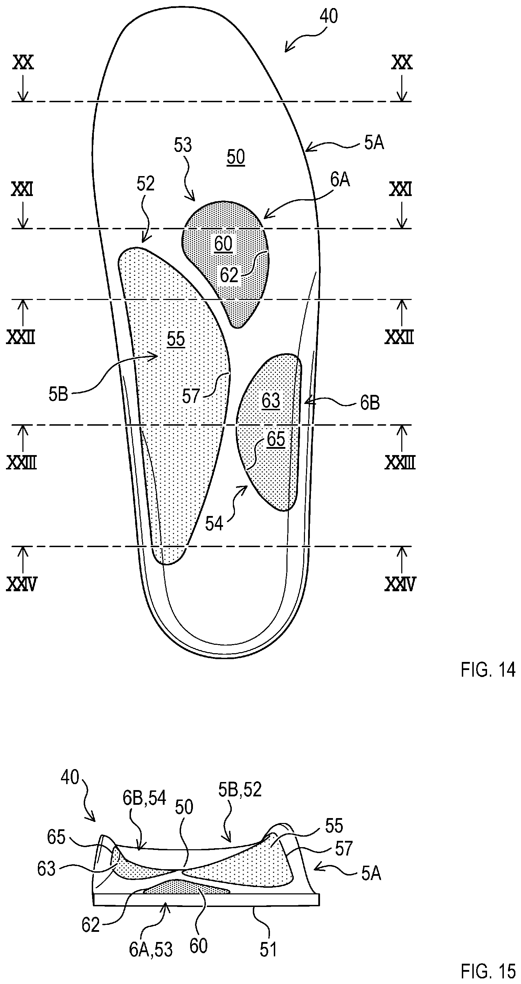

The main portion 5A is a flat portion arranged in a manner that the main portion 5A is to face substantially the entire area of the foot sole (see FIGS. 14 to 25). More specifically, the main portion 5A, for example, extends in substantially the entire area of the shoe sole and is configured to support substantially the entire area of the foot sole.

The main portion 5A includes an upper surface 50 and a lower surface 51 as in the first embodiment. The main portion 5A also includes a covered portion 52 configured in the same manner as in the first embodiment and formed in an area on the upper surface 50, and the area is to face the medial longitudinal arch portion. The main portion 5A further includes a front sub-covered portion 53 and a rear sub-covered portion 54.

The front sub-covered portion 53 is formed on the upper surface 50 of the main portion 5A at a position that will face the transverse arch portion of the foot sole. The rear sub-covered portion 54 is formed on the upper surface 50 at a position that will face the lateral longitudinal arch portion of the foot sole. The front sub-covered portion 53 and the rear sub-covered portion 54 are each formed as an indentation on the upper surface 50.

### [(3) Medial Arch Portion]

The medial arch portion 5B has a configuration similar to that in the first embodiment and includes an upper surface 55 and a lower surface 56 (see FIGS. 14, 15, and 20 to 25). The medial arch portion 5B is arranged in the covered portion 52 as in the first embodiment, and the lower surface 56 of the medial arch portion 5B is joined to the covered portion 52.

For example, a case is assumed where the medial arch portion 5B is formed of a gel material (for example, Crystal Gel), and the main portion 5A is formed of a porous material (for example, a sponge material such as EVA). In such a case, the medial arch portion 5B and the covered portion 52 may be joined to each other using a hot-melt.

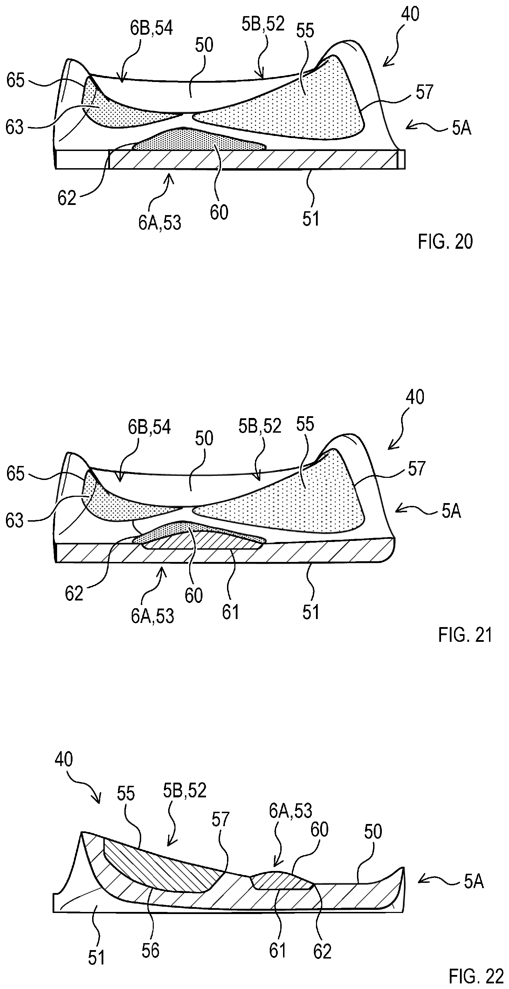

An outer edge 57 of the medial arch portion 5B is entirely or partly formed as a linear portion (see FIGS. 22 to 25) as in the first embodiment. A portion of the outer edge 57 that is not formed as the linear portion may have a rounded shape or may extend in a planar manner.

### [(4) Front Portion and Rear Portion]

The front portion 6A and the rear portion 6B are provided respectively corresponding to the front sub-covered portion 53 and the rear sub-covered portion 54, and each arranged in the corresponding sub-covered portion in the same manner that the medial arch portion 5B is arranged in the covered portion 52 (see FIGS. 14, 15, 19 to 23, and 25).

Specifically, the front portion 6A and the rear portion 6B are arranged so as to respectively cover the front sub-covered portion 53 and the rear sub-covered portion 54, and each have a flat shape, for example. The front portion 6A includes an upper surface 60 located to be adjacent to the foot sole, and a lower surface 61 opposite the upper surface 60; and the rear portion 6B includes an upper surface 63 located to be adjacent to the foot sole, and a lower surface 64 opposite the upper surface 63. Of course, the front portion 6A and the rear portion 6B are not limited to flat shapes and may take on various shapes.

The lower surface 61 of the front portion 6A has a shape that matches the front sub-covered portion 53 and is configured to contact (for example, closely contact) the front sub-covered portion 53, and the lower surface 64 of the rear portion 6B has a shape that matches the rear sub-covered portion 54 and is configured to contact (for example, closely contact) the rear sub-covered portion 54. The lower surfaces 61, 64 of the front portion 6A and the rear portion 6B are respectively joined to the front sub-covered portion 53 and the rear sub-covered portion 54 in the same manner that the medial arch portion 5B is joined to the covered portion 52.

An outer edge 62 of the front portion 6A and an outer edge 65 of the rear portion 6B are entirely or partly formed as linear portions (see FIGS. 21 to 23, and 25) in the same manner as the outer edge 57 of the medial arch portion 5B. The respective portions of the outer edges 62, 65 that are not formed as the linear portions may each have a rounded shape or extend in a planar manner.

### [(5) Surface Layer Material]

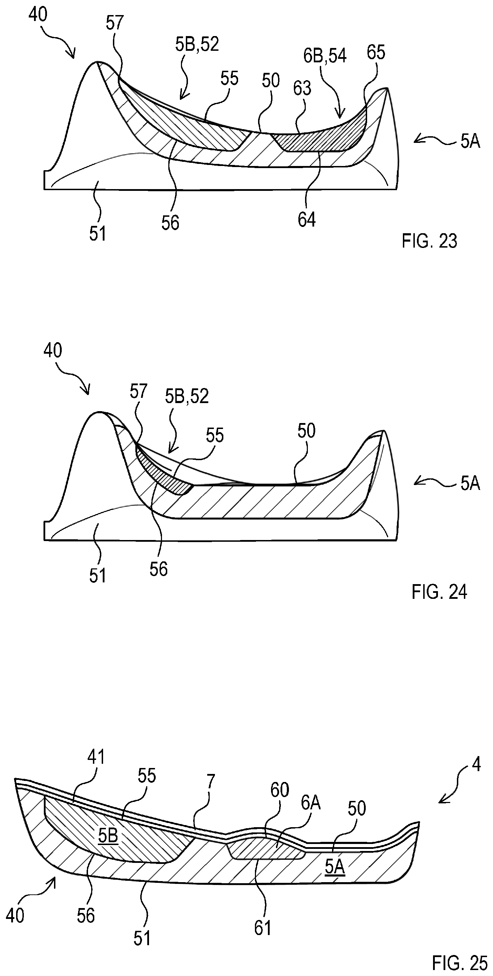

The surface layer material 7 is a sheet-shaped member as in the first embodiment. The surface layer material 7 covers the entirety of the upper surface of the cushion material 40, which is a surface to be adjacent to the foot sole; the cushion material 40 is formed by the main portion 5A and by the medial arch portion 5B, the front portion 6A, and the rear portion 6B respectively arranged in the covered portion 52, the front sub-covered portion 53, and the rear sub-covered portion 54 (see FIGS. 13 and 25).

Unlike the first embodiment, the surface layer material 7 has a configuration as an upper surface layer material and does not have a lower surface layer material. In other words, the surface layer material 7 covers the upper surface 50 of the main portion 5A, the upper surface 55 of the medial arch portion 5B, the upper surface 60 of the front portion 6A, and the upper surface 63 of the rear portion 6B. In contrast, the lower surface 51 of the main portion 5A is not covered by the surface layer material 7. Similarly to the first embodiment, the surface layer material 7 and the upper surfaces 50, 55, 60, 63 of the main portion 5A, the medial arch portion 5B, the front portion 6A, and the rear portion 6B are joined to each other using a hot-melt 41.

The surface layer material 7 according to the second embodiment is not provided with an ear portion. Thus, the outer edge of the surface layer material 7 is arranged along the outer edge of the cushion material 40.

Of course, the surface layer material 7 according to the second embodiment is not limited to this configuration and may be configured in the same manner as the surface layer material in the first embodiment. Specifically, the surface layer material 7 may include an upper surface layer material and a lower surface layer material and may be provided with an ear portion similar to that in the first embodiment.

### [(6) Overall Shape and Material of Insole]

As in the first embodiment, the shapes and the thicknesses of the main portion 5A, of the medial arch portion 5B, of the front portion 6A, and of the rear portion 6B are adjusted so that the insole 4 to has a three-dimensional shape which fits the shape of the foot sole (see FIG. 14 to 25).

The numerical ranges of the hardness of the material forming the main portion 5A and of the hardness of the material forming the medial arch portion 5B, and the magnitude relationship between these hardnesses, and the numerical range of the difference between these hardnesses are defined the same as in the first embodiment.

The hardness of the material forming the front portion 6A and the hardness of the material forming the rear portion 6B may be the same as the hardness of the material forming the medial arch portion 5B.

The medial arch portion 5B, the front portion 6A, and the rear portion 6B are each formed of, for example, a gel material. Specifically, the medial arch portion 5B, the front portion 6A, and the rear portion 6B may be each formed of, for example, a styrene-based gel material, more specifically, may be formed of Crystal Gel described above. In contrast, the main portion 5A may be formed of, for example, a porous material having a cushioning property (for example, a sponge material such as EVA).

Of course, the materials of the medial arch portion 5B, the front portion 6A, and the rear portion 6B are not limited to this, and all of or at least one of the medial arch portion 5B, the front portion 6A, and the rear portion 6B may be each formed of a material, other than gel materials, such as a porous material. The main portion 5A may be formed of a gel material (for example, Crystal Gel).

### [3. Third Embodiment]

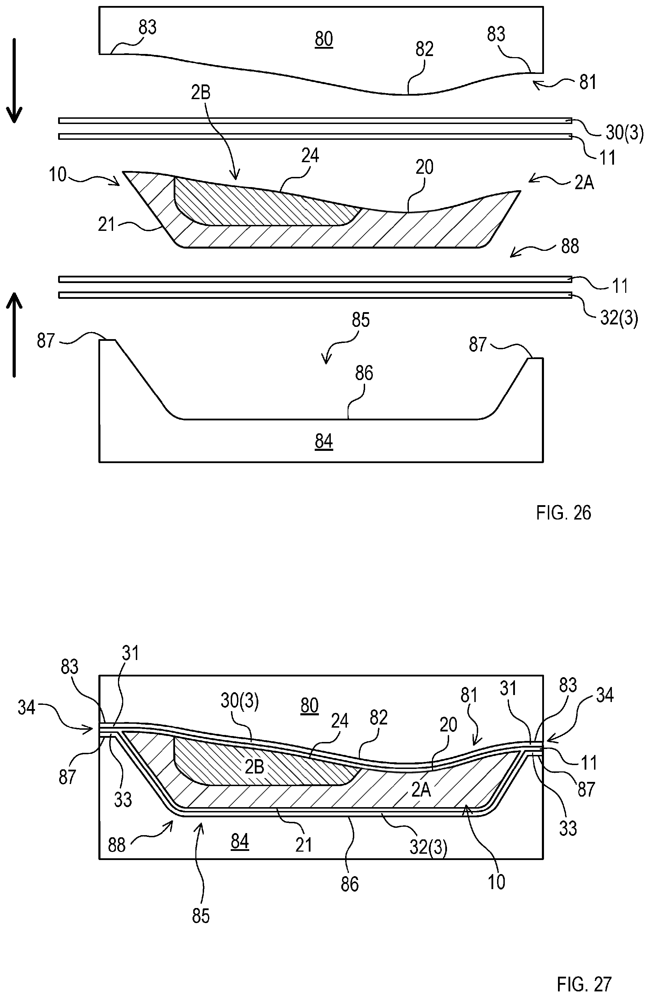

In a third embodiment, an example of a method for manufacturing the insole 1 according to the first embodiment will be described. Steps of manufacturing the insole 1 include an arranging step and a joining step (see FIGS. 26 and 27). The arranging step is a step of arranging the main portion 2A with the medial arch portion 2B arranged in the covered portion 22 (in other words, the cushion material 10), the upper surface layer material 30, the lower surface layer material 32, and the hot-melt 11. The joining step is a step of joining the main portion 2A and the medial arch portion 2B to the surface layer material 3 using the hot-melt 11.

In the joining step, a first die 80 and a second die 84 are used to perform joining using the hot-melt 11.

The first die 80 includes a first contact surface 81, and the first contact surface 81 are provided with a first portion 82 and a first circumferential portion 83. The first portion 82 is formed as a protruding portion in the first contact surface 81 and provided so as to be spaced apart from the outer edge of the first contact surface 81. The first circumferential portion 83 is adjacent to the outer edge of the first contact surface 81 and surrounds the first portion 82.

The second die 84 includes a second contact surface 85, and the second contact surface 85 is provided with a second portion 86 and a second circumferential portion 87. The second portion 86 is formed as a recessed portion in the second contact surface 85 and provided so as to be spaced apart from the outer edge of the second contact surface 85. The second circumferential portion 87 is adjacent to the outer edge of the second contact surface 85 and surrounds the second portion 86.

When the first die 80 and the second die 84 are arranged such that the first and the second portions 82, 86 face each other and the first and the second circumferential portions 83, 87 face each other, a housing space 88 is formed between the first and the second portions 82, 86.

In the arranging step, the first and the second dies 80, 84 are arranged so that the first contact surface 81 and the second contact surface 85 face each other (see FIG. 26). At this time, the cushion material 10 is arranged between the first contact surface 81 and the second contact surface 85. The upper surface layer material 30 is arranged between the first contact surface 81 and the cushion material 10, and the hot-melt 11 is arranged between the upper surface layer material 30 and the cushion material 10. The lower surface layer material 32 is arranged between the second contact surface 85 and the cushion material 10, and the hot-melt 11 is arranged between the lower surface layer material 32 and the cushion material 10.

Subsequently, in the arranging step, the first die 80 and the second die 84 are brought close to each other, thereby forming the housing space 88 (see FIG. 27). At this time, the surface layer material 3, the cushion material 10, and the hot-melt 11 are arranged in the housing space 88, forming a heated object.

Specifically, in the heated object, the upper surface layer material 30 is arranged so as to cover the upper surfaces 20, 24 of the main portion 2A and of the medial arch portion 2B, and the hot-melt 11 is arranged between the upper surfaces 20, 24 and the upper surface layer material 30. The upper surface layer material 30 contacts (in other words, faces) the first portion 82 of the first die 80. The upper surfaces 20, 24 of the main portion 2A and of the medial arch portion 2B face the first portion 82.

In the heated object, the lower surface layer material 32 is arranged so as to cover the lower surface 21 of the main portion 2A, and the hot-melt 11 is arranged between the lower surface 21 and the lower surface layer material 32. The lower surface layer material 32 contacts (in other words, faces) the second portion 86 of the second die 84. The lower surface 21 of the main portion 2A faces the second portion 86.

The upper edge portion 31 of the upper surface layer material 30 and the lower edge portion 33 of the lower surface layer material 32 are overlapped, and the hot-melt 11 is arranged therebetween. The upper edge portion 31 contacts the first circumferential portion 83 of the first die 80, and the lower edge portion 33 contacts the second circumferential portion 87 of the second die 84.

In the subsequent joining step, the first and the second dies 80, 83 are heated to thereby heat the heated object and melt the hot-melt 11. Subsequently, the heated object is cooled to thereby join the upper surfaces 20, 24 of the main portion 2A and of the medial arch portion 2B and the upper surface layer material 30 to each other and join the lower surface 21 of the main portion 2A and the lower surface layer material 32 to each other. At this time, the upper edge portion 31 and the lower edge portion 33 are also joined to each other using the hot-melt 11, thereby forming the ear portion 34.

The shape of the first portion 82 of the first die 80 and the shape the second portion 86 of the second die 84 are not limited to those described above and may be suitably defined among shapes that allow the housing space 88 to be formed between the first and the second portions 82, 86. Specifically, for example, the first portion 82 of the first die 80 may be formed as a recessed portion in the first contact surface 81, and the second portion 86 of the second die 84 may be formed as a protruding portion in the second contact surface 85.

### [4. Fourth Embodiment]

In a fourth embodiment, an example of a method for manufacturing the insole 4 according to the second embodiment will be described. In cases where the insole 4 is manufactured in accordance with the manufacturing method of the fourth embodiment, it is desirable that the main portion 5A is formed of a sponge material such as EVA (in other words, a heat resistant material).

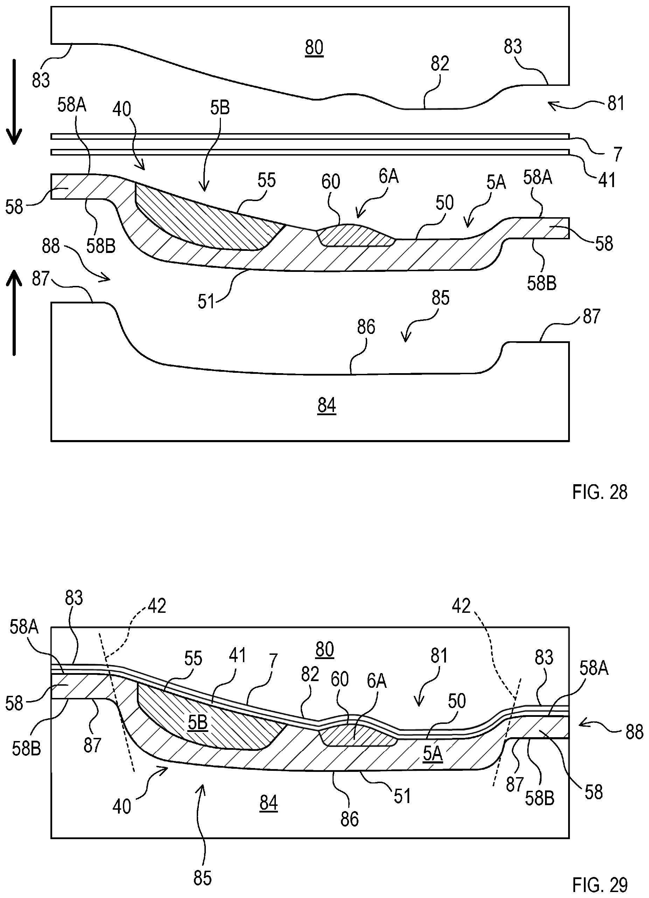

Steps of manufacturing the insole 4 include a cutting step in addition to the same arranging and joining steps (see FIGS. 28 and 29) as in the third embodiment.

The arranging step is a step of arranging the cushion material 40, the surface layer material 7, and a hot-melt 41. The cushion material 40 means the main portion 5A with the medial arch portion 5B, the front portion 6A, and the rear portion 6B respectively arranged in the covered portion 52, the front sub-covered portion 53, and the rear sub-covered portion 54.

The joining step is a step of joining the cushion material 40 and the surface layer material 7 to each other using the hot-melt 41. In the joining step, the same first and second dies 80, 84 as in the third embodiment are used to perform joining using the hot-melt 41.

In the arranging step, the cushion material 40 forming the heated object is arranged between the first contact surface 81 and the second contact surface 85 (see FIG. 28) as in the third embodiment. At this time, the surface layer material 7 is arranged between the first contact surface 81 and the cushion material 40, and the hot-melt 41 is arranged between the surface layer material 7 and the cushion material 40.

Subsequently, in the arranging step, the first die 80 and the second die 84 are brought close to each other, thereby forming the housing space 88 (see FIG. 29) as in the third embodiment. At this time, the surface layer material 7, the cushion material 40, and the hot-melt 41 forming the heated object are arranged in the housing space 88.

The cushion material 40 in the heated object according to the fourth embodiment is provided with a cut portion 58. The cut portion 58 is a portion integrated with the main portion 5A. In other words, the main portion 5A and the cut portion 58 are formed not by joining separate members but by processing a single workpiece into a specified shape. The cut portion 58 is provided along the upper surface 50 of the main portion 5A and provided so as to surround the outer edge of the upper surface 50. The cut portion 58 is thinner than the main portion 5A, protrudes from the sides of the main portion 5A, and has an upper surface 58A adjacent to the upper surface 50 of the main portion 5A.

In the heated object, the surface layer material 7 is arranged so as to cover the upper surfaces 50, 58A, 55, 60, 63 of the main portion 5A, of the cut portion 58, of the medial arch portion 5B, of the front portion 6A, and of the rear portion 6B; and the hot-melt 41 is arranged between the upper surfaces and the surface layer material 7. The surface layer material 7 contacts the first portion 82 and the first circumferential portion 83 of the first die 80. The upper surfaces of the main portion 5A, of the medial arch portion 5B, of the front portion 6A, and of the rear portion 6B face the first portion 82. In contrast, the upper surface 58A of the cut portion 58 faces the first circumferential portion 83.

In the heated object, the lower surface 51 of the main portion 5A contacts the second portion 86 of the second die 84. A lower surface 58B of the cut portion 58 located on the side opposite the upper surface 58A contacts the second circumferential portion 87 of the second die 84.

In other words, the cut portion 58 is interposed between the first circumferential portion 83 and the second circumferential portion 87.

In the subsequent joining step, the first and second dies 80, 84 are heated to thereby heat the heated object and melt the hot-melt 41. Subsequently, the heated object is cooled to thereby join the upper surfaces 50, 58A, 55, 60, 63 of the main portion 5A, of the cut portion 58, of the medial arch portion 5B, of the front portion 6A, and of the rear portion 6B to the surface layer material 7.

In the subsequent cutting step, the cushion material 40 with the surface layer material 7 joined thereto is cut along a cutting plane 42 (see FIG. 29). Accordingly, the cut portion 58 and the portion of the surface layer material 7 that covers the cut portion 58 are cut off the main portion 5A, and the insole 4 is formed.

### [5. Effects]

(1) According to the first and the second embodiments, the medial arch portions 2B, 5B are respectively formed as separate members from the main portions 2A, 5A. In addition, the hardnesses of the materials forming the medial arch portions 2B, 5B are respectively different from the hardnesses of the materials forming the main portions 2A, 5A. Accordingly, by selecting the shapes, the thicknesses, and the hardnesses of the medial arch portions 2B, 5B, it is possible to adjust the shapes and the heights of the respective portions of the insoles 1, 4 that are configured to be in contact with the medial longitudinal arch portion, and to adjust hardness distributions of these portions. This improves the fit of the insoles 1, 4 to the foot sole and makes it possible to facilitate dispersion of pressure applied to the foot sole from the insoles 1, 4. Thus, shoe comfort is improved.
   Since the medial arch portions 2B, 5B are respectively arranged on the upper surfaces 20, 50 of the main portions 2A, 5A, it is possible to form a hardness distribution at a position close to the foot sole compared to a case where the medial arch portions 2B, 5B are respectively arranged on the lower surfaces 21, 51. This makes it possible to facilitate dispersion of the pressure applied to the foot sole from the insoles 1, 4. Furthermore, by forming the main portions 2A, 5A and the medial arch portions 2B, 5B as separate members, customization becomes easier in terms of the shape of the shoe sole, the hardness distribution, and the like depending on the type of shoes, the user of the shoes, and so on.
(2) The covered portions 22, 52 of the main portions 2A, 5A are respectively formed as indented areas of the upper surfaces 20, 50. Thus, when the medial arch portions 2B, 5B are respectively arranged in the covered portions 22, 52, positioning of the medial arch portions 2B, 5B becomes easy and arranging the medial arch portions 2B, 5B becomes easy.
(3) The outer edges 26, 57 of the medial arch portions 2B, 5B are respectively formed by the linear portions forming the ends of the upper surfaces 24, 55 and the lower surfaces 25, 56. Thus, it is possible to inhibit sudden changes in thickness of the medial arch portions 2B, 5B in the vicinities of the outer edges 26, 57 of the medial arch portions 2B, 5B. Thus, it is possible to facilitate smooth changes in hardness distribution in the areas in the vicinities of the outer edges 26, 57 of the medial arch portions 2B, 5B. As a result, it is possible to reduce discomfort to the user.
(4) By providing low hardnesses to the main portions 2A, 5A compared respectively to the medial arch portions 2B, 5B, the main portions 2A, 5A sink more easily in accordance with load from the foot sole, differences in height are created more easily between the medial arch portions 2B, 5B and the main portions 2A, 5A. This facilitates contact of the insoles 1, 4 with the medial longitudinal arch portion, improves the fit, and facilitate dispersion of the pressure applied to the foot sole from the insoles 1, 4. The medial longitudinal arch portion of the foot sole is a soft portion. It is possible to support such a portion with the medial arch portions 2B, 5B having relatively high hardnesses, and thus possible to provide a sense of stability to the user.
(5) By providing low hardnesses to the medial arch portions 2B, 5B compared respectively to the main portions 2A, 5A, the medial arch portions 2B, 5B sink more easily in accordance with the load from the foot sole. This facilitates contact of the insoles 1, 4 with the medial longitudinal arch portion, improves the fit, and facilitates dispersion of the pressure applied to the foot sole from the insoles 1, 4 even if the foot sole has a shallow medial longitudinal arch portion, in other words, the foot sole is a so-called splayfoot or a similar foot sole.
(6) In the insole 1 according to the first embodiment, the upper surface and the lower surface of the cushion material 10 are respectively covered with the upper surface layer material 30 and the lower surface layer material 32. This makes it possible to moderately reinforce the medial arch portion 2B and the main portion 2A, and inhibit loss of shape of the insole 1 due to the load from the foot sole. Thus, it is possible to inhibit impairment of the fit of the insole 1 and of the dispersion of the pressure applied to the foot sole from the insole 1.
(7) In the insole 4 according to the second embodiment, the upper surface of the cushion material 40 is covered with the surface layer material 7. This enables the medial arch portion 5B and the main portion 5A to be suitably integrated using the surface layer material 7. Thus, it is possible to inhibit impairment of the fit of the insole 4 and of the dispersion of the pressure applied to the foot sole from the insole 4.
(8) In the insole 1 according to the first embodiment, it is possible to suitably join the upper surface layer material 30 and the lower surface layer material 32 to each other at the ear portion 34. It is also possible due to the ear portion 34 to inhibit loss of shape of the insole 1 and improve the strength of the insole 1.
(9) According to the manufacturing method of the third embodiment, it is possible to suitably manufacture the insole 1 that has improved fit to the foot sole and is capable of facilitating dispersion of the pressure applied to the foot sole. Thus, shoe comfort is improved. It is also possible to suitably join the surface layer material 3 to the medial arch portion 2B and the main portion 2A. It is also possible to suitably form the ear portion 34.
(10) According to the manufacturing method of the fourth embodiment, it is possible to suitably manufacture the insole 4 that has improved fit to the foot sole and is capable of facilitating dispersion of the pressure applied to the foot sole. Thus, shoe comfort is improved. It is also possible to suitably join the surface layer material 7 to the medial arch portion 5B and the main portion 5A.

### [6. Other Embodiments]

(1) In the aforementioned embodiments, the covered portions 22, 52 are respectively formed as the indentations on the upper surfaces 20, 50 of the main portions 2A, 5A. However, the covered portions 22, 52 are not limited to this shape and may take on various shapes.

Specifically, the covered portions 22, 52 may be respectively formed, for example, as protruding portions on the upper surfaces 20, 50, and the lower surfaces 25, 56 of the medial arch portions 2B, 5B may be each formed in an indented shape that matches the corresponding upper surface. The lower surfaces 25, 56 of the medial arch portions 2B, 5B may respectively contact the covered portions 22, 52, and thereby the positions of the medial arch portions 2B, 5B may be determined so as to respectively cover the covered portions 22, 52.

For another example, the covered portions 22, 52 may each include a portion extending in a planar manner and at least one protrusion formed in the portion, and the lower surfaces 25, 56 of the medial arch portions 2B, 5B may each include a portion extending in a planar manner and at least one hole in which the protrusion of the corresponding covered portion fits. The protrusions fit in the holes, and thereby the lower surfaces 25, 56 of the medial arch portions 2B, 5B respectively match the covered portions 22, 52. This may determine the positions of the medial arch portions 2B, 5B so as to respectively cover the covered portions 22, 52. Of course, the protrusions may be respectively formed on the lower surfaces of the medial arch portions 2B, 5B, and the holes may be formed in the covered portions so that the lower surfaces of the medial arch portions 2B, 5B match the respective covered portions.

Even in a case of such a configuration, when the medial arch portions 2B, 5B are respectively arranged in the covered portions 22, 52, positioning of the medial arch portions 2B, 5B becomes easy and arranging the medial arch portions 2B, 5B becomes easy.

(2) The insole 4 according to the second and the fourth embodiments may be configured without both the front portion 6A and the rear portion 6B or without any one of the front portion 6A or the rear portion 6B. Of course, the configuration of the insole 4 is not limited to this, and the insole 4 may be further provided with a portion that covers a specified area in the main portion 5A similarly to the front portion 6A and the rear portion 6B. The insole 1 according to the first and the third embodiments may be further provided with a portion that covers a specified area in the main portion 2A similarly to the front portion 6A and the rear portion 6B in the second embodiment.

(3) Two or more functions achieved by one element of the above-described embodiments may be achieved by two or more elements. One function achieved by one element may be achieved by two or more elements. Two or more functions achieved by two or more elements may be achieved by one element. One function achieved by two or more elements may be achieved by one element. A part of the configurations in the above-described embodiments may be omitted. At least a part of the configurations in one of the above-described embodiments may be added to or replaced with the configuration in another one of the above-described embodiments.

### [7. Technical Ideas Disclosed by Present Specification]

### [Technical Ideas Disclosed by Present Specification]

### [Item 1]

An insole for a shoe, the insole including:
a main portion that is a flat portion having a cushioning property and arranged in a manner that the main portion is to face a heel, a medial longitudinal arch portion, and a lateral longitudinal arch portion of a foot sole;
a covered portion formed in an area on a surface of the main portion, the surface being configured to be adjacent to the foot sole, the area being configured to face the medial longitudinal arch portion; and
a medial arch portion that is a portion having a cushioning property and arranged so as to cover the covered portion,
in the medial arch portion, a surface to be adjacent to the foot sole being an upper surface, and a surface opposite the upper surface being a lower surface,
the lower surface of the medial arch portion having a shape that matches the covered portion, and
the main portion and the medial arch portion being each formed of a material having a different hardness.

### [Item 2]

The insole according to Item 1, wherein
the covered portion is formed as an indented area on the surface of the main portion that is to be adjacent to the foot sole.

### [Item 3]

The insole according to Item 1 or 2, wherein
at least a portion of the outer edge of the medial arch portion is formed by a linear portion that forms outer edges of the upper surface and of the lower surface.

### [Item 4]

The insole according to any one of Items 1 to 3, wherein
the hardness of the material forming the main portion and the hardness of the material forming the medial arch portion is 10 durometers or greater and 50 durometers or less, and
a value obtained by subtracting the hardness of the material forming the main portion from the hardness of the material forming the medial arch portion is 10 durometers or greater and 40 durometers or less.

### [Item 5]

The insole according to any one of Items 1 to 3, wherein
the hardness of the material forming the main portion and the hardness of the material forming the medial arch portion is 10 durometers or greater and 50 durometers or less, and
a value obtained by subtracting the hardness of the material forming the medial arch portion from the hardness of the material forming the main portion is 10 durometers or greater and 40 durometers or less.

### [Item 6]

The insole according to any one of Items 1 to 5, further including
a surface layer material that is a sheet-shaped member covering the upper surface of the medial arch portion arranged in the covered portion and an upper surface of the main portion, the upper surface of the medial arch portion and the upper surface of the main portion being each a surface to be adjacent to the foot sole, wherein
the surface layer material and the upper surfaces of the medial arch portion and of the main portion are joined to each other using a hot-melt.

### [Item 7]

The insole according to Item 6, wherein
the surface layer material further covers a lower surface of the main portion, the lower surface being located on a side opposite the upper surface of the main portion, and
the surface layer material and the lower surface of the main portion are joined to each other using the hot-melt.

### [Item 8]

The insole according to Item 7, further including
an ear portion provided along an outer edge of the main portion, wherein
the surface layer material includes: an upper surface layer material covering the upper surfaces of the medial arch portion and of the main portion; and a lower surface layer material covering the lower surface of the main portion,
the ear portion includes: an upper edge portion that includes an outer edge of the upper surface layer material; and a lower edge portion that includes an outer edge of the lower surface layer material, and
the upper edge portion and the lower edge portion are arranged in an overlapping manner and joined to each other using the hot-melt.

### [Item 9]

A method for manufacturing an insole for a shoe using a first die and a second die,
the insole including:
   a main portion that is a flat portion having a cushioning property and arranged in a manner that the main portion is to face a heel, a medial longitudinal arch portion, and a lateral longitudinal arch portion of a foot sole;
   a covered portion formed in an area on a surface of the main portion, the surface being configured to be adjacent to the foot sole, the area being configured to face the medial longitudinal arch portion; and
   a medial arch portion that is a portion having a cushioning property and arranged so as to cover the covered portion,
   a surface of the medial arch portion opposite the surface to be adjacent to the foot sole being a lower surface,
the lower surface of the medial arch portion having a shape that matches the covered portion,
the main portion and the medial arch portion being each formed of a material having a different hardness,
the insole further including an upper surface layer material that is a sheet-shaped member covering an upper surface of the medial arch portion arranged in the covered portion and an upper surface of the main portion, the upper surface of the medial arch portion and the upper surface of the main portion being each a surface to be adjacent to the foot sole,
the first die including a first portion,
the second die including a second portion configured to form a housing space between the second portion and the first portion when the second portion faces the first portion, and
in a heated object, a hot-melt being arranged between the upper surfaces of the medial arch portion and of the main portion and the upper surface layer material covering the upper surfaces, the medial arch portion being arranged in the covered portion,
the method for manufacturing the insole including:
   arranging the heated object in the housing space formed between the first portion and the second portion so that:
      the upper surface layer material and the upper surfaces of the medial arch portion and of the main portion face the first portion of the first die; and
      the lower surface of the main portion faces the second portion of the second die; and
   joining the upper surfaces of the medial arch portion and of the main portion and the upper surface layer material to each other by heating, through the first die and the second die, the heated object.

### [Item 10]

The method for manufacturing an insole according to Item 9, wherein
the insole further includes a lower surface layer material that is a sheet-shaped member and a portion covering the lower surface of the main portion, the lower surface being a surface located opposite the upper surface of the main portion,
the heated object further includes a hot-melt arranged between the lower surface of the main portion and the lower surface layer material covering the lower surface,
the method for manufacturing the insole includes:
   arranging the heated object in the housing space so that the upper surface layer material and the upper surfaces of the medial arch portion and of the main portion face the first portion of the first die, and the lower surface layer material and the lower surface of the main portion face the second portion of the second die; and
   joining, by heating the heated object through the first die and the second die, the upper surfaces of the medial arch portion and of the main portion and the upper surface layer material to each other, and the lower surface of the main portion and the lower surface layer material to each other.

### [Item 11]

The method for manufacturing an insole according to Item 10, wherein
the insole further includes an ear portion provided along an outer edge of the main portion,
the ear portion includes:
   an upper edge portion that includes an outer edge of the upper surface layer material; and
   a lower edge portion that includes an outer edge of the lower surface layer material,
in the method for manufacturing the insole,
when the heated object is arranged in the housing space, the upper edge portion and the lower edge portion overlap each other between the first die and the second die, and the hot-melt is arranged between the upper edge portion and the lower edge portion, and
by heating the heated object through the first die and the second die, the upper edge portion and the lower edge portion are also joined to each other to thereby form the ear portion.

### [Item 12]

The method for manufacturing an insole according to Item 9, wherein
the heated object further includes a cut portion provided along an outer edge of the upper surface of the main portion, the main portion and the cut portion being formed as an integrated member,
in the heated object, the upper surface layer material covers the upper surfaces of the medial arch portion and of the main portion and the cut portion, and the hot-melt is arranged between the upper surface layer material and the medial arch portion, the main portion, and the cut portion,
the first die further includes a first circumferential portion provided along an outer edge of the first portion,
the second die further includes a second circumferential portion provided along an outer edge of the second portion,
in the method for manufacturing the insole,
the heated object is arranged in the housing space such that the cut portion is interposed between the first circumferential portion and the second circumferential portion,
the medial arch portion, the main portion, and the cut portion are joined to the upper surface layer material by heating the heated object through the first die and the second die, and
the method for manufacturing the insole further includes, subsequent to joining of the medial arch portion, the main portion, and the cut portion and the upper surface layer material to each other, cutting off the cut portion and a portion of the upper surface layer material that covers the cut portion.

## Claims

1. A method for manufacturing an insole (1) for a shoe using a first die (80) and a second die (84),
the insole (1) including:
a main portion (5A) that is a flat portion having a cushioning property and arranged in a manner that the main portion (5A) is to face a heel, a medial longitudinal arch portion, and a lateral longitudinal arch portion of a foot sole;
a covered portion (52) formed in an area on a surface of the main portion (5A), the surface being configured to be adjacent to the foot sole, the area being configured to face the medial longitudinal arch portion; and
a medial arch portion (5B) that is a portion having a cushioning property and arranged so as to cover the covered portion (52),
a surface of the medial arch portion (5B) opposite the surface to be adjacent to the foot sole being a lower surface (56),
the lower surface (56) of the medial arch portion (5B) having a shape that matches the covered portion (52),
the main portion (5A) and the medial arch portion (5B) being each formed of a material having a different hardness,
the insole (1) further including an upper surface layer material (7) that is a sheet-shaped member covering an upper surface (55) of the medial arch portion (5B) arranged in the covered portion (52) and an upper surface (50) of the main portion (5A), the upper surface (55) of the medial arch portion (5B) and the upper surface (50) of the main portion (5A) being each a surface to be adjacent to the foot sole,
the first die (80) including:
a first portion (82) having a shape corresponding to a shape of the insole (1); and
a first circumferential portion (83) surrounding the first portion (82),
the second die (84) including:
a second portion (86) that is a recessed portion configured to form a housing space (88) between the second portion (86) and the first portion (82) when the second portion (86) faces the first portion (82), the second portion (86) being a portion having a shape corresponding to the shape of the insole (1); and
a second circumferential portion (87) surrounding the second portion (86), and
in a heated object,
a hot-melt being arranged between the upper surfaces (55, 50) of the medial arch portion (5B) and of the main portion (5A) and the upper surface layer material (7) covering the upper surfaces (55, 50), the medial arch portion (5B) being arranged in the covered portion (52), and
an upper edge portion being formed in the upper surface layer material (7) so as to surround the upper surfaces (55, 50),
the method for manufacturing the insole (1) comprising:
arranging the heated object in the housing space (88) formed between the first portion (82) and the second portion (86), the housing space (88) being formed by bringing the first circumferential portion (83) and the second circumferential portion (87) close to each other so that:
the upper surface layer material (7) and the upper surfaces (55, 50) of the medial arch portion (5B) and of the main portion (5A) face the first portion (82) of the first die (80);
a lower surface (51) of the main portion (5A) faces the second portion (86) of the second die (84); and
the upper edge portion is positioned between the first circumferential portion (83) and the second circumferential portion (87); and
joining the upper surfaces (55, 50) of the medial arch portion (5B) and of the main portion (5A) and the upper surface layer material (7) to each other by heating, through the first die (80) and the second die (84), the heated object arranged in the housing space (88),
the heated object further including a cut portion (58) provided along an outer edge of the upper surface (50) of the main portion (5A), the main portion (5A) and the cut portion (58) being formed as an integrated member,
in the heated object, the upper surface layer material (7) covering the upper surfaces (55, 50) of the medial arch portion (5B) and of the main portion (5A), the upper edge portion of the upper surface layer material (7) covering the cut portion (58), and the hot-melt being arranged between the upper surface layer material (7) and the medial arch portion (5B), the main portion (5A), and the cut portion (58),
in the method for manufacturing the insole (1),
the heated object being arranged in the housing space (88) such that the upper edge portion and the cut portion (58) are interposed between the first circumferential portion (83) and the second circumferential portion (87), and
the medial arch portion (5B), the main portion (5A), and the cut portion (58) being joined to the upper surface layer material (7) by heating the heated object through the first die (80) and the second die (84), and
the method for manufacturing the insole (1) further comprising, subsequent to joining the medial arch portion (5B), the main portion (5A), and the cut portion (58) and the upper surface layer material (7) to each other, cutting off the cut portion (58) and a portion of the upper surface layer material (7) that covers the cut portion (58).

2. The method for manufacturing an insole (1) according to claim 1, wherein
the hardness of the material forming the medial arch portion (2B; 5B) is higher than the hardness of the material forming the main portion (2A; 5A).

3. The method for manufacturing an insole (1) according to claim 1 to or 2, wherein
the medial arch portion (2B; 5B) is formed of a styrene-based gel material.
